# EUROPÄISCHE PATENTSCHRIFT

(11) **EP 0 923 674 B1**
(45) Veröffentlichungstag und Bekanntmachung des Hinweises auf die Patenterteilung: **11.09.2002**
(21) Anmeldenummer: 97930414.4
(22) Anmeldetag: 26.06.1997
(51) Int. Cl.: F04B 17/03, H02K 7/14, B60T 8/40, F16D 1/08, F16H 57/02

(54) **AGGREGAT, BESTEHEND AUS EINEM ELEKTROMOTOR UND EINER VON DIESEM ANGETRIEBENEN ARBEITSMASCHINE**
UNIT CONSISTING OF AN ELECTRIC MOTOR AND OF A WORKING MACHINE DRIVEN THEREBY
ORGANE CONSTITUE D'UN MOTEUR ELECTRIQUE ET D'UNE MACHINE MOTRICE ENTRAINEE PAR CELUI-CI

(30) Priorität: 09.08.1996 DE 19632167
(43) Veröffentlichungstag der Anmeldung: 23.06.1999
(73) Patentinhaber: Continental Teves AG & Co. oHG, 60488 Frankfurt (DE); Fag Automobiltechnik AG, 97421 Schweinfurt (DE)
(72) Erfinder: BURGDORF, Jochen, D-63075 Offenbach am Main (DE); HOFMANN, Heinrich, D-97422 Schweinfurt (DE)
(74) Vertreter: Portwich, Peter
(86) Internationale Anmeldenummer: EP9703353
(87) Internationale Veröffentlichungsnummer: WO98006942

(56) Entgegenhaltungen:
- EP-A- 0 461 808
- EP-A- 0 539 849
- EP-A- 0 566 067
- DE-A- 4 444 644
- DE-U- 29 514 768
- US-A- 5 074 680
- US-A- 5 340 285

## Beschreibung

Die Erfindung betrifft ein Aggregat nach dem Oberbegriff des Anspruchs 1.

Aus der DE-43 15 826 A1 ist ein derartiges Aggregat bekannt. Dabei ist in dem Gehäuse des Elektromotors eine Antriebswelle in einem ersten Lager und einem zweiten Lager am anderen Ende des Gehäuses gehalten, wobei im Gehäuse der Arbeitsmaschine ein drittes Lager für die Antriebswelle vorgesehen ist, die ihrerseits auf ihrem Exzenter ein viertes Lager trägt, über welches die Kolben der Arbeitsmaschine betätigt werden. Das zweite Lager ist mit seinem Außenumfang sowohl im Lagerschild des Elektromotors angeordnet, erstreckt sich aber axial auch in die Bohrung des Gehäuses der Arbeitsmaschine, wenn beide zusammengebaut sind. Durch diese Konstruktion wird es möglich, den Elektromotor zum Probebetrieb unabhängig von der Arbeitsmaschine zu betreiben.

Nachteilig bei dieser Konstruktion ist jedoch, daß neben der Vielzahl der Lager und der Lagersitzstellen und der durch den Exzenter komplizierten Wellenausbildung die von den Kolben der Arbeitsmaschine her kommenden radial wirkenden Reaktionskräfte von dem zweiten Lager aufgenommen werden müssen. Dieses muß entsprechend dimensioniert werden, was Bauraum beansprucht und im Hinblick auf den engen Luftspalt zwischen Rotor und Stator des Elektromotors problematisch ist.

Es ist deshalb Aufgabe der Erfindung, ein Aggregat der eingangs genannten Art so weiterzubilden, daß mit einfachen Mitteln eine kostengünstige und Bauraum sparende Lagerung sowohl des Elektromotors als auch der Arbeitsmaschine ermöglicht wird.

Die Lösung dieser Aufgabe gelingt mit den im kennzeichnenden Teil des Anspruchs 1 angegebenen Merkmalen. Weitere vorteilhafte Weiterbildungen sind in den Ansprüchen 2 - 4 angegeben.

Dadurch, daß die Antriebswelle des Elektromotors und die Stützachse der Arbeitsmaschine separat ausgebildet sind, ist es möglich, die von den Kolben der Arbeitsmaschine kommenden Radialkräfte über die Stützachse direkt in das Gehäuse der Arbeitsmaschine zu leiten, so daß das zweite Lager davon befreit ist. Die Antriebswelle ist radiallastfrei und kann, da der Exzenter nun vom Zwischenring des Dreiringlagers gebildet wird, kostengünstig gefertigt werden. Das erste und das zweite Lager können wegen der Radiallastfreiheit als Gleitlager, Kalottenlager oder entsprechend niedrig dimensionierte Kugellager ausgeführt sein. Das Dreiringlager bildet dabei eine handhabungs- und montagefreundliche Baueinheit. Die Drehmomentübertragungshülse, welche die Verbindung zum Elektromotor herstellt, ist ebenfalls als ein kostengünstiges Teil herstellbar, das gegebenenfalls zur Schwingungsdämpfung aus Kunststoff gefertigt sein kann. Die Drehmomentübertragungshülse kann auch entfallen, wenn die Antriebswelle direkt in den exzentrischen Zwischenring eingepreßt ist.

Die Erfindung soll an einem Ausführungsbeispiel näher dargestellt werden. Es zeigt:
- Fig. 1: ein erfindungsgemäßes Aggregat im Querschnitt.
- Fig. 2: vergrößert das Dreiringlager mit der Drehmomentübertragungshülse.

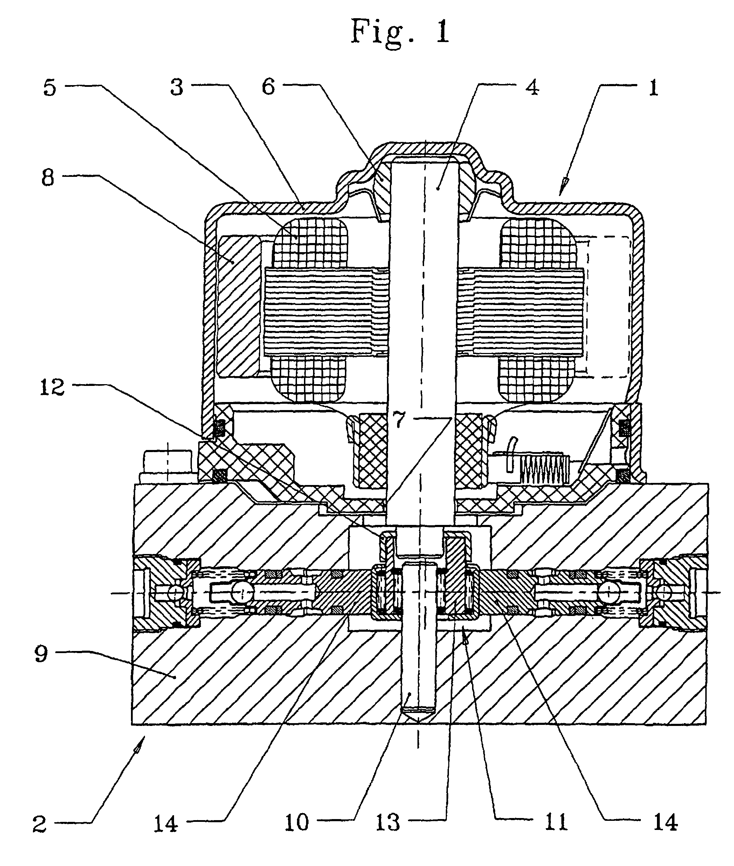

In Fig. 1 ist der Elektromotor mit 1 und die Arbeitsmaschine mit 2 bezeichnet. Im Gehäuse 3 des Elektromotors 1 ist die Antriebswelle 4, auf der der Rotor 5 angeordnet ist, in einem oberen ersten Lager 6 und einem unteren zweiten Lager 7 gegenüber dem Stator 8 drehbar gelagert. Die Lager 6 und 7 sind bei diesem Beispiel als Gleitlager ausgeführt und zum Probebetrieb des Elektromotors 1 ausreichend, da sie ja keine Radialkräfte aufnehmen müssen. Im Gehäuse 9 der Arbeitsmaschine 2 ist die Stützachse 10 befestigt, auf der das Dreiringlager 11 angeordnet ist. Die mit der Antriebswelle 4 verbundene Drehmomentübertragungshülse 12 überträgt das Drehmoment auf den exzentrischen Zwischenring 13 des Dreiringlagers 11, wodurch die Kolben 14 der Arbeitsmaschine axial hin und her bewegt werden und so den z.B. für den Betrieb eines Antiblockiersystems erforderlichen Druck aufbauen. Die dabei auftretenden Reaktionskräfte werden über den Außenring 15 des Dreiringlagers 11 und die Nadelreihen 16 und 17 direkt auf die Stützachse 10 und damit in das Gehäuse 9 der Arbeitsmaschine 2 geleitet.

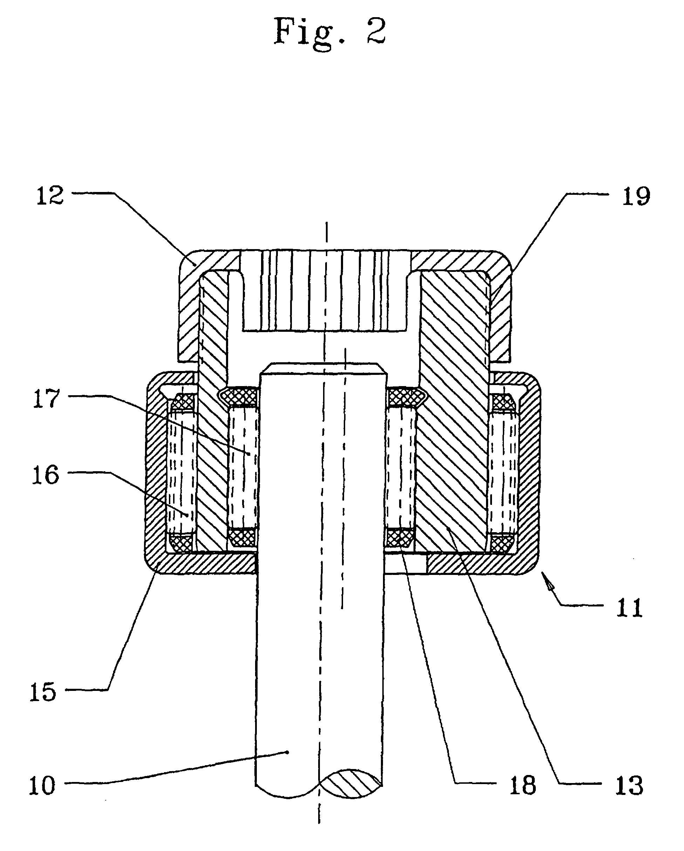

Wie aus Fig. 2 zu sehen ist, bilden der Außenring 15, der exzentrische zwischenring 13, die Nadelreihen 16 und 17 und gegebenenfalls noch die Drehmomentübertragungshülse 12 eine Baueinheit, die die Handhabung und Montage erleichtern. Dazu ist das Dreiringlager mit am Käfig ausgebildeten Dichtscheiben 18 gegen das Eindringen von Schmutz bzw. das Austreten von Schmierfett geschützt. Der exzentrische Zwischenring 13 ist breiter als der Außenring ausgeführt und in seinem überstehenden, dem Elektromotor zugewandten Bereich mit einer Außenverzahnung 19 versehen, die mit der Drehmomentübertragungshülse 12 zusammenwirkt. An Stelle der Verzahnung können auch Rändel vorgesehen sein, da die Art, wie der Zwischenring 13 mit der Antriebswelle 4 verbunden ist sehr variabel gestaltet werden kann. Die Verwendung eines Dreiringlagers mit Nadeln als Wälzkörpern ergibt eine radial eng bauende Lagerung.

## Patentansprüche

1. Aggregat, bestehend aus einem Elektromotor (1) und einer von diesem angetriebenen Arbeitsmaschine (2), vorzugsweise einer Kolbenpumpe z.B. für Antiblockiersysteme von Kraftfahrzeugen, wobei Kolben (14) der Arbeitsmaschine (2) über einen Exzenter (11, 12, 13) antreibbar sind und der Elektromotor (1) für seinen Probelauf von der Arbeitsmaschine (2) trennbar ist, **dadurch gekennzeichnet, daß** die Antriebswelle (4) des Elektromotors (1) und die Stützachse (10) der Arbeitsmaschine (2) separat ausgebildet sind und auf der Stützachse (10) ein mit einem exzentrischen Zwischenring (13) versehenes Dreiringlager (11) angeordnet ist, wobei der Zwischenring (13) mit der Antriebswelle (4) form- und/oder kraftschlüssig verbunden ist.

2. Aggregat nach Anspruch 1, **dadurch gekennzeichnet, daß** das Dreiringlager (11) als Nadellager ausgebildet ist.

3. Aggregat nach Anspruch 1, **dadurch gekennzeichnet, daß** der Zwischenring (13) breiter als der Außenring (15) ausgeführt ist und in seinem überstehenden, dem Elektromotor (1) zugewandten Bereich mit einer Außenverzahnung (19) versehen ist und über eine in ihrer Bohrung eine Innenverzahnung aufweisende Drehmomentübertragungshülse (12) mit der Antriebswelle (4) des Elektromotors (1) verbindbar ist.

4. Aggregat nach Anspruch 1, **dadurch gekennzeichnet, daß** die Drehmomentübertragungshülse (12) mit der Antriebswelle (4) über eine Mehrfachverzahnung verbunden ist.

## Claims

1. Unit consisting of an electric motor (1) and a machine (2) driven by the electric motor, preferably a piston pump for anti-lock systems of automotive vehicles, for example, wherein pistons (14) of the machine (2) are adapted to be driven by way of an eccentric (11, 12, 13) and the electric motor (1) is adapted to be separated from the machine (2) for trial run purposes,
**characterized in that** the drive shaft (4) of the electric motor (1) and the supporting axle (10) of the machine (2) are designed separately, and a three-ring bearing (11) including an intermediate eccentric ring (13) is mounted on the supporting axle (10), wherein the intermediate ring (13) is positively and/or operatively connected to the drive shaft (4).

2. Unit as claimed in claim 1,
**characterized in that** the three-ring bearing (11) is configured as a needle bearing.

3. Unit as claimed in claim 1,
**characterized in that** the intermediate ring (13) has wider dimensions than the outer ring (15) and includes an external toothing (19) in its projecting area that faces the electric motor (1), and the intermediate ring is adapted to be connected to the drive shaft (4) of the electric motor (1) by way of a torque-transmitting sleeve (12) which includes an internal toothing in its bore.

4. Unit as claimed in claim 1,
**characterized in that** the torque-transmitting sleeve (12) is connected to the drive shaft (4) by way of a multiplex gear-tooth system.

## Revendications

1. Groupe constitué d'un moteur électrique (1) et d'une machine de travail (2) entraînée par celui-ci, de préférence une pompe à piston, par exemple pour des systèmes d'antiblocage de véhicules automobiles, dans lequel des pistons (14) de la machine de travail (2) peuvent être entraînés par l'intermédiaire d'un excentrique (11, 12, 13) et le moteur électrique (1) peut être séparé, pour sa marche d'essai, de la machine de travail (2), **caractérisé en ce que** l'arbre moteur (4) du moteur électrique (1) et l'axe d'appui (10) de la machine de travail (2) sont réalisés séparément et sur l'axe d'appui (10) est disposé un palier à trois bagues (11) pourvu d'une bague intermédiaire (13) excentrée, la bague intermédiaire (13) étant reliée par complémentarité de forme et/ou à force à l'arbre moteur (4).

2. Groupe selon la revendication 1, **caractérisé en ce que** le palier à trois bagues (11) est réalisé en tant que palier à aiguilles.

3. Groupe selon la revendication 1, **caractérisé en ce que** la bague intermédiaire (13) est réalisée plus large que la bague extérieure (15) et est pourvue, dans sa zone débordante tournée vers le moteur électrique (1), d'une denture extérieure (19) et peut être reliée à l'arbre moteur (4) du moteur électrique (1), par l'intermédiaire d'une douille (12) de transmission du couple de rotation, qui présente une denture intérieure dans son perçage.

4. Groupe selon la revendication 1, **caractérisé en ce que** la douille (12) de transmission du couple de rotation est reliée à l'arbre moteur (4) par l'intermédiaire d'une denture multiple.
